# EUROPEAN PATENT SPECIFICATION

(11) **EP 2 327 897 B1**
(45) Date of publication and mention of the grant of the patent: **04.07.2018**
(21) Application number: 09816168.0
(22) Date of filing: 24.09.2009
(51) Int. Cl.: F16C 33/66, F16C 19/26, F16C 33/46, F16C 33/58

(54) **ROLLING BEARING**
WÄLZLAGER
PALIER À ROULEMENT

(30) Priority: 24.09.2008 JP 2008244501; 03.10.2008 JP 2008258464; 06.10.2008 JP 2008259663; 16.09.2009 JP 2009214602
(43) Date of publication of application: 01.06.2011
(73) Proprietor: JTEKT Corporation, Osaka-shi Osaka 542-8502 (JP)
(72) Inventor: YAMAMOTO, Takeshi, Osaka-shi Osaka 542-8502 (JP); HAYASHI, Yuichiro, Osaka-shi Osaka 542-8502 (JP)
(74) Representative: Hoefer & Partner Patentanwälte mbB
(86) International application number: PCT/JP2009/066545
(87) International publication number: WO 2010/035753

(56) References cited:
- JP-A- 5 060 145
- JP-A- 2003 232 366
- JP-A- 2005 351 439
- JP-A- 2006 316 842
- JP-A- 2007 247 784
- JP-U- H0 510 827
- US-A- 3 195 965

## Description

### Technical Field

The present invention relates to a rolling bearing, and more particularly to a rolling bearing of a type which sprays compressed air for supplying lubricating oil of an oil/air lubrication system to a part between a cage and a guide surface.

### Background Art

Generally, a rolling bearing such as a cylindrical roller bearing includes: an outer ring; an inner ring concentrically arranged inside the outer ring in a radial direction; a plurality of rolling elements arranged between the outer ring and the inner ring so as to roll; and a cage for holding circumferential intervals of the plurality of rolling elements. Further, as a guide system of the cage of the rolling bearing, three guide systems are known, which include an outer ring guide, an inner ring guide and a rolling element guide.

In the rolling element guide of the above-described guide systems, a heat generation or seizure is likely to occur in a pocket of the cage due to: a runout of the cage caused by a centrifugal force generated during a high speed rotation; an increase in a surface pressure by a load received from the rolling elements; and a shortage of lubrication on a slide surface. Thus, the rolling element guide is disadvantageous in view of durability. As compared therewith, since the outer ring guide or the inner ring guide (hereinafter referred to as a bearing ring guide) has a higher abrasion resistance performance during the high speed rotation than the rolling element guide, the bearing ring guide can be preferably used, for example, for supporting a main spindle of a machine tool. However, even in the bearing ring guide, when the cage moves in the axial direction, the rolling elements cannot be stably held. Further, the cage collides with the rolling elements in the axial direction, which causes the occurrence of the abrasion or abnormal sound and increases a running torque. On the other hand, in order to reduce the abrasion due to the contact of the cage and the bearing ring, lubrication between both the members is desired to be properly maintained, and a radial position of the cage is desired to be stabilized.

A below-described patent document 1 discloses that lubricating oil is supplied to a part between a cage and an outer ring so as to prevent an abrasion or seizure due to a contact of both the members. However, a collision of the cage with rolling elements due to an axial movement of the cage cannot be prevented.

US 3,195,965 A discloses an antifriction bearing, comprising spaced rings having opposed raceways therein, antifriction elements riding said raceways and spacing said rings, and retainer means embracing said elements and holding the same in angularly spaced relation, said retainer means and one of said rings having opposed adjacent circumferentially continuous surfaces in closely spaced relation, means including an annular air-supply fluid passage in said retainer means and communicating circumferentially uniformly with the space between said surfaces, and pressurized air-supply means including radially directed passage means communicating with said annular passage for circumferentially uniformly inducing a fluid flow between said surfaces. JP H05 10827 U describes the same basic construction.

### Related Art Documents

### Patent Documents

Patent Document 1: JP-A-5-60145

### Summary of the Invention

### Problem to be solved by the Invention

An object of the present invention is to provide a rolling bearing capable of stabilizing an axial position of a cage and properly maintaining lubrication between a bearing ring and the cage.

### Means for solving the Problem

(1) A rolling bearing of the present invention includes: a first raceway member having a first annular raceway surface; a second raceway member having a second annular raceway surface opposing the first raceway surface; a guide member having an annular guide surface arranged at a position different from the second raceway surface in an axial direction and formed integrally with or separately from the second raceway member; a plurality of rolling elements arranged between the first raceway surface and the second raceway surface so as to roll; and an annular cage that holds the plurality of rolling elements at given intervals in a circumferential direction and has a guided surface opposing the guide surface such that the guided surface can slidably contact the guide surface, wherein a flow path for compressed air for supplying lubricating oil is provided in the guide member, wherein the flow path has a discharge opening in the guide surface, wherein the guided surface has two annular sprayed surfaces to which the compressed air discharged from the discharge opening is sprayed, and wherein the sprayed surfaces are defined as inclined surfaces inclined to opposite directions to each other with respect to the axial direction.
   According to the above-described structure, the compressed air for supplying lubricating oil, for example, of an oil/air lubrication system is discharged from the discharge opening formed in the guide surface and sprayed to the two sprayed surfaces of the guided surface. Since the two sprayed surfaces are inclined to the opposite directions to each other with respect to the axial direction, the cage is supported at a position where an axial force generated due to the compressed air sprayed to the sprayed surfaces is balanced. In accordance with this operation, an axial position of the cage can be stabilized, the rolling elements can be stably held by the cage, an axial collision of the cage and the rolling elements can be suppressed, and an occurrence of abrasion or abnormal sound and the increase of running torque can be prevented.
   Further, since the lubricating oil is supplied to a part between the guide surface and the guided surface by the compressed air, abrasion or seizure due to the contact of the guide surface and the guided surface can be suppressed. Further, since the compressed air is sprayed to the sprayed surfaces, the cage can be stably supported with respect to the radial direction. The two sprayed surfaces which are inclined to the opposite directions to each other with respect to the axial direction may be formed, for example, as a pair of side wall surfaces of an annular groove or as a pair of side wall surfaces of an annular protruding part.
(2) Preferably, in the above-described structure, the guided surface has an annular groove formed along the circumferential direction, the flow path has the discharge opening opened in the guide surface and configured to discharge the compressed air in the radial direction, the discharge opening is arranged so as to oppose the annular groove in the radial direction within an opening width of the annular groove, the annular groove has a pair of side wall surfaces as the sprayed surfaces which are inclined to the opposite directions to each other with respect to the axial direction such that a distance between the pair of side wall surfaces is gradually decreased from an opening side of the groove to a groove bottom side, and the distance between the pair of opposing side wall surfaces is set larger than a diameter of the discharge opening in an opening edge of the groove and smaller than the diameter of the discharge opening at the groove bottom.
   According to the above-described structure, when the compressed air is discharged from the discharge opening of the guide surface, the compressed air is sprayed to the pair of side wall surfaces (the sprayed surfaces) in the annular groove. Since the pair of side wall surfaces are inclined to the opposite directions to each other such that a width between them is gradually decreased from the opening side of the groove to the groove bottom side, the cage is supported in the axial direction at a position where an axial force generated by spraying the compressed air is balanced, namely, so that a central position between the pair of side wall surfaces corresponds to a center of the discharge opening. In accordance with this operation, the axial position of the cage can be stabilized, the rolling elements can be stably held by the cage, a collision of the cage and the rolling elements in the axial direction can be suppressed and an occurrence of abrasion or abnormal sound and the increase of running torque can be prevented.
   Further, the lubricating oil can be held in the annular groove, a lubricating state between the guide surface and the guided surface can be properly maintained. Further, since the compressed air is sprayed to the side wall surfaces of the annular groove of the cage, the cage can be stably supported with respect to the radial direction.
(3) Preferably, in the structure of the above-described (1) or (2), the cage is movable in the axial direction within a range of a clearance between a pocket and the rolling element, and dimensions of a diameter of the discharge opening and an opening width of the annular groove are set such that the discharge opening opposes the annular groove within the opening width of the annular groove even when the cage is moved in the axial direction. Thus, an operation for supporting the cage is assuredly achieved by spraying the compressed air to the pair of side wall surfaces (the sprayed surfaces) and the axial position of the cage can be more stabilized.
(4) Preferably, in the structure of the above-described (1) or (2), the flow path has at least two discharge openings separate from one another in the axial direction in the guide surface, and the guided surface has two annular sprayed surfaces to which the compressed air discharged from the two discharge openings is respectively sprayed.
   According to this structure, the compressed air is discharged respectively from the two discharge openings formed in the guide surface and sprayed respectively to the two sprayed surfaces which are inclined in the opposite directions to each other with respect to the axial direction. Accordingly, as described above, the cage can be supported at the position where the axial force generated by spraying the compressed air respectively to the sprayed surfaces is balanced and the axial position of the cage can be stabilized.
(5) Preferably, in the structure of the above-described (4), the two discharge openings are arranged in parallel in the axial direction, and the flow path has other discharge opening between the two discharge openings.
   In such a structure, since the compressed air discharged from other discharge opening is hardly supplied to both sides in the axial direction by the compressed air discharged from the two discharge openings at both the sides in the axial direction, the cage can be strongly supported with respect to the radial direction. Thus, a contact surface pressure of the guide surface and the guided surface can be lowered and a running torque of the cage can be reduced.
(6) In the structure of the above-described (4) or (5), one of the two discharge openings may be arranged on one side of the rolling element in the axial direction, and the other of the two discharge openings may be arranged on the other side of the rolling element in the axial direction. According to such a structure, since the compressed air can be sprayed to the sprayed surfaces with good balance in both the sides of the rolling element in the axial direction, an inclination of the cage can be suppressed and the cage can be stably supported with respect to the axial direction at the same time.
(7) Preferably, in the structure of any one of the above-described (1) to (6), the guide member comprises a spacer arranged adjacent to the second raceway member.
   Since the spacer may be a member separate from the second raceway member, the spacer may be formed with a material high in its heat radiation which is different from that of the second raceway member or the volume (mass) may be more increased than that of the second raceway member to improve the heat radiation. Thus, the rise of temperature of the guide member due to a contact with the cage can be suppressed and seizure can be prevented.
(8) Preferably, in the structure of any one of the above-described (1) to (7), the guide surface is arranged in the first raceway surface side than in the second raceway surface with respect to the radial direction.
   In such a way, since the guide surface is arranged more in the first raceway surface side than in the second raceway surface with respect to the radial direction, the guide surface can be allowed to come close to the guided surface of the cage and the cage can be guided without forming the cage in a special configuration.
(9) A rolling bearing of the present invention includes: a first raceway member having a first annular raceway surface; a second raceway member having a second annular raceway surface opposing the first raceway surface; a guide member having an annular guide surface arranged at a position different from the second raceway surface in an axial direction and formed integrally with or separately from the second raceway member; a plurality of rolling elements arranged between the first raceway surface and the second raceway surface so as to roll; and an annular cage that holds the plurality of rolling elements at given intervals in a circumferential direction and has a guided surface opposing the guide surface such that the guided surface can slidably contact the guide surface, wherein a flow path for compressed air for supplying lubricating oil is provided in the guide member, wherein opposing areas between the guide surface and the guided surface are arranged to be separated in the axial direction, and wherein a buffer area is formed between the axially separated opposing areas, and is configured to reduce pressure of the compressed air entering from the flow path, and to increase the pressure of the compressed air and to supply the compressed air to the opposing areas arranged at both sides in the axial direction.
   According to this structure, the compressed air for supplying the lubricating oil of an oil/air lubrication system enters the buffer area from the flow path, and then flows to the opposing areas of the guide surface and the guided surface from both the sides of the buffer area in the axial direction. Thus, the lubricating oil is supplied to a part between the guide surface and the guided surface by the compressed air, so that abrasion or seizure due to a contact of the guide surface and the guided surface can be suppressed.
   Then, the pressure of the compressed air entering the buffer area from the flow path is reduced, and then, when the compressed sir flows to the opposing areas of the guide surface and the guided surface from both the sides of the buffer area in the axial direction, the pressure of the compressed air is increased. Namely, the pressure of the compressed air is increased at two axial positions at both the sides of the buffer area separate in the axial direction. Thus, the cage is hardly inclined in the radial direction and a position of the cage can be stabilized with respect to the radial direction. Further, the contact surface pressure between the guide surface and the guided surface can be lowered by the compressed air supplied from both the sides of the buffer area in the axial direction, a rotating resistance of the cage can be reduced, and the abrasion or seizure due to the contact of the guide surface and the guided surface can be more assuredly suppressed.
(10) In the structure of the above-described (9), the buffer area is defined by a groove provided in at least one of the guide surface and the guided surface. Thus, the buffer area can be simply formed.
(11) In the structure of the above-described (9) or (10), the guide member comprises a spacer arranged adjacent to the second raceway member. Thus, since the spacer is a member separate from the second raceway member, the spacer may be formed with a material high in its heat radiation which is different from that of the second raceway member or the volume (mass) may be more increased than that of the second raceway member to improve the heat radiation. Thus, the rise of temperature of the guide member due to a contact with the cage can be suppressed and seizure can be prevented.

### Advantages of the Invention

According to the present invention, under a state that the axial position of the cage is stabilized, a lubricating state between the raceway member and the cage can be properly maintained. Further, the lubrication of the cage and the guide surface can be properly maintained and the position of the cage can be stabilized in the radial direction at the same time, and the abrasion or seizure of the cage can be preferably prevented.

### Brief Description of the Drawings

Fig. 1 is a sectional view of a rolling bearing according to a first exemplary embodiment of the present invention.
Fig. 2 is an enlarged sectional view of a main part (a part A of Fig. 1) of the bearing according to the first exemplary embodiment.
Fig. 3 is an enlarged sectional view of a main part (a part A of Fig. 1) of the bearing according to the first exemplary embodiment.
Fig. 4 is a sectional view of a main part of a rolling bearing according to a second exemplary embodiment of the present invention.
Fig. 5 is a sectional view of a main part of a rolling bearing according to a third exemplary embodiment of the present invention.
Fig. 6 is a sectional view of a rolling bearing according to a fourth exemplary embodiment of the present invention.
Fig. 7 is an enlarged sectional view of a main part of the bearing according to the fourth exemplary embodiment.
Fig. 8 is an enlarged sectional view of a main part of a rolling bearing according to a fifth exemplary embodiment of the present invention
Fig. 9 is an enlarged sectional view of a main part of a rolling bearing according to a sixth exemplary embodiment of the present invention.
Fig. 10 is an enlarged sectional view of a main part of a rolling bearing according to a seventh exemplary embodiment of the present invention
Fig. 11 is an enlarged sectional view of a main part of a rolling bearing according to an eighth exemplary embodiment of the present invention.
Fig. 12 is a sectional view of a rolling bearing according to a ninth exemplary embodiment of the present invention.
Fig. 13 is a sectional view of a rolling bearing according to a tenth exemplary embodiment of the present invention.
Fig. 14 is a sectional view of a rolling bearing according to an eleventh exemplary embodiment of the present invention
Fig. 15 is an enlarged sectional view of a main part of the rolling bearing according to the eleventh exemplary embodiment.
Fig. 16 is a sectional view of a main part of a rolling bearing according to a twelfth exemplary embodiment of the present invention.
Fig. 17 is a sectional view of a main part of a rolling bearing according to a thirteenth exemplary embodiment of the present invention.

### Mode for Carrying Out the Invention

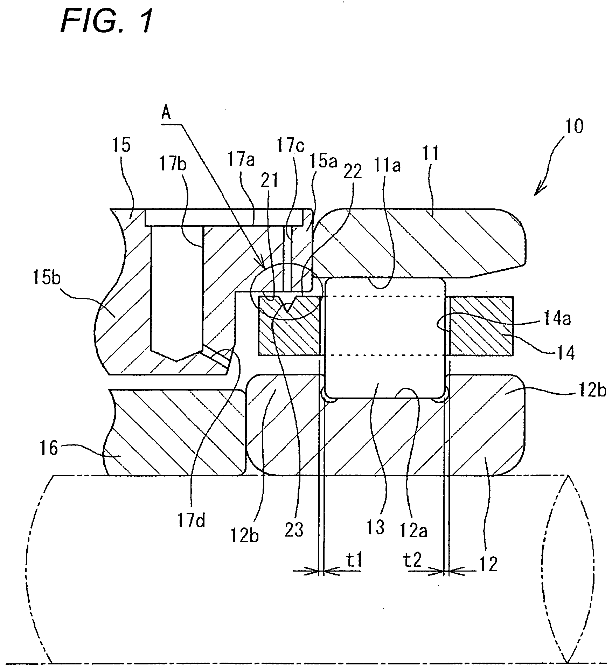

Fig. 1 is a sectional view of a rolling bearing 10 according to a first exemplary embodiment of the present invention. The rolling bearing 10 includes an annular outer ring (a second raceway member) 11, an inner ring (a first raceway member) 12 concentrically arrange in an inner peripheral side of the outer ring 11, a plurality of cylindrical rollers 13 as rolling elements arranged between the outer ring 11 and the inner ring 12 and a cage 14 for holding the cylindrical rollers 13 at prescribed intervals in the circumferential direction. In a below-described explanation, an axially outward (outside in the axial direction) direction means a direction directed toward both sides in the axial direction from a central part of the cylindrical roller bearing 10. An axially inward direction (inside in the axial direction) means a direction directed toward a central part in the axial direction from both sides of the cylindrical roller bearing 10 in the axial direction.

The outer ring 11 is a member formed in an annular shape by using alloy steel such as bearing steel. On an inner peripheral surface of the outer ring, an outer ring raceway surface 11a on which the cylindrical rollers 13 roll is formed along the circumferential direction.

The inner ring 12 is also a member formed in an annular shape by using the alloy steel such as the bearing steel. On an outer peripheral surface of the inner ring, an inner ring raceway surface 12a on which the cylindrical rollers 13 roll is formed so as to oppose the outer ring raceway surface 11a. Further, on the outer peripheral surface of the inner ring 12, an inner ring collar part 12b is formed that protrudes radially outward at both sides of the inner ring raceway surface 12a in the axial direction. By this inner ring collar part 12b, the axial movement of the cylindrical rollers 13 is regulated.

The plurality of cylindrical rollers 13 can roll on the outer ring raceway surface 11a and the inner ring raceway surface 12a. Thus, the outer ring 11 and the inner ring 12 are rotatable relative to each other.

The outer ring 11 has an axial length smaller than that of the inner ring 12. At one end in the axial direction (a right end in Fig. 1), the axial position of the outer ring corresponds to the axial position of the inner ring 12. However, the other end of the outer ring (a left end) is retracted from the inner ring 12 in the axial direction. On a left side of the outer ring 11 in the axial direction, an outer spacer 15 is provided adjacent thereto, and the axial position of the outer ring 11 is set by the outer spacer 15. Further, on a left side of the inner ring 12 in the axial direction, an inner side spacer 16 is provided adjacent thereto and the axial position of the inner ring 12 is set by the inner side spacer 16. The outer ring 11, the inner ring 12 and the spacers 15 and 16 may be respectively arranged in opposite sides of the right and left sides.

The outer spacer 15 has a large inner diameter at a part 15a adjacent to the outer ring 11 in the axial direction, and has a small inner diameter at a part 15b separated from the outer ring 11 in the axial direction. The part 15b is arranged outside the cage 14 in the axial direction (a left side in Fig. 1. An inner peripheral surface of the part 15b comes close to an outer peripheral surface of the inner side spacer 16. An inner peripheral surface 21 of the part 15a adjacent to the outer ring 11 is arranged slightly inside the outer ring raceway surface 11a in the radial direction (the inner ring 12 side).

The cage 14 is a cylindrical member formed by using a synthetic resin such as a phenol resin and includes a plurality of pockets 14a that respectively accommodate and hold the plurality of cylindrical rollers 13 at prescribed intervals in the circumferential direction. The cage 14 is arranged between the outer ring 11 and the inner ring 12 so as to be substantially concentric with both the rings 11 and 12. One end of the cage 14 in the axial direction (the left side in Fig. 1) protrudes outward from the outer ring 11 in the axial direction. On an outer peripheral surface thereof, a guided surface 22 is provided so as to oppose the inner peripheral surface (a guide surface) 21 of the part 15a of the outer spacer 15 such that the guided surface 22 can slidably contact the inner peripheral surface 21.

When the outer ring 11 and the inner ring 12 are rotated relatively to each other to rotate the cage 14 and the outer spacer 15 relatively to each other, the guided surface 22 of the cage 14 slidably contacts the guide surface 21 of the outer spacer 15. Thus, the cage 14 is guided by the guide surface 21 so that the center of rotation of itself is substantially the same as the centers of rotation of the outer ring 11 and the inner ring 12. Accordingly, the outer spacer 15 functions as a guide member for guiding the rotation of the cage 14.

In the outer spacer 15, flow paths 17a to 17d are formed for supplying lubricating oil to the cylindrical roller bearing 10. The flow paths 17a to 17d includes the peripheral groove 17a formed on an outer peripheral surface of the outer spacer 15 along the circumferential direction, a first flow path 17b formed inward from a bottom part of the peripheral groove 17a in the radial direction in the part 15b of the outer spacer 15, a second flow path 17c formed inward from the bottom part of the peripheral groove 17a in the radial direction and opened in the guide surface 21 in the part 15a nearer to the outer ring 11 side than to the first flow path 17b and a third flow path 17d formed toward a part between the inner ring 12 and the cage 14 from an inner end part of the first flow path 17b in the radial direction. The first flow path 17b, the second flow path 17c and the third flow path 17d are formed at a plurality of positions (preferably, three or more positions) in the circumferential direction of the outer spacer 15.

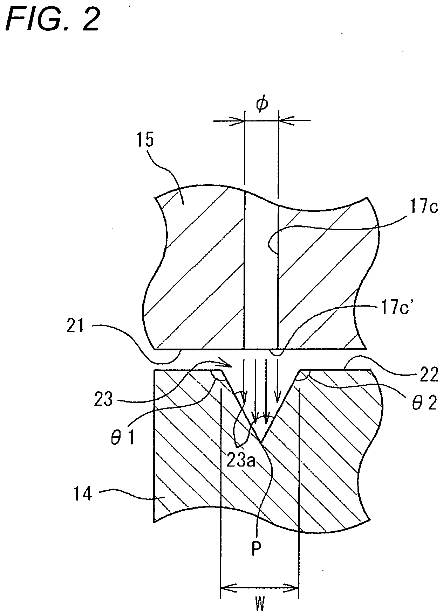

Fig. 2 is an enlarged view of a part A in Fig. 1. The second flow path 17c has a discharge opening 17c' arranged so as to oppose an annular groove 23 formed in the guided surface 22.

The annular groove 23 is formed along the circumferential direction of the cage 14 and includes a pair of side wall surfaces 23a arranged so as to be inclined substantially in a V shape so that a width is gradually narrower toward a groove bottom side from an opening side. A distance between the pair of side wall surfaces 23a is W at a maximum in an opening edge and minimum in a groove bottom part P. In this exemplary embodiment, since the pair of side wall surfaces 23a come into contact with each other in the groove bottom part P, the minimum distance between the pair of side wall surfaces 23a is substantially 0. Further, the inclination angles θ1 and θ2 of the pair of side wall surfaces 23a relative to the guided surface 22 are the same. The angle is set within a range expressed by 90° < θ1 = θ2 <180°, and preferably, within a range expressed by 90° < θ1=θ2 <135°.

The discharge opening 17c' of the second flow path 17c has a diameter Ø formed to be smaller than opening width W of the annular groove 23. Thus, the discharge opening 17c' opposes the annular groove 23 in the opening width W of the annular groove 23. Further, the cage 14 can move in the axial direction within a range ((t1 + t2) in Fig. 1) of a clearance between the pocket 14a and the cylindrical roller 13. The dimensions Ø and W and positions of the discharge opening 17c' and the annular groove 23 are respectively set so that the discharge opening 17c' constantly opposes the annular groove 23 in the opening width W of the annular groove 23 even when the cage 14 moves in the axial direction.

More specifically, under a state that the position of the groove bottom part P of the annular groove 23 corresponds to a central position of the discharge opening 17c' of the second flow path 17 with respect to the axial direction, the dimensions of the cylindrical roller 13 and the cage 14, the dimension Ø of the discharge opening 17c' and the width W of the annular groove 23 and relative positions of them are set so that the clearance t1 is formed between an end face of the cylindrical roller 13 in one side in the axial direction and an inner surface of the pocket 14a opposing the end face in the axial direction and the clearance t2 is formed between an end face of the cylindrical roller 13 in the other side in the axial direction and an inner surface of the pocket 14a opposing the end face in the axial direction. The clearances t1 and t2 between the end faces of the cylindrical roller 13 at both sides in the axial direction and the inner surface of the pocket 14a are preferably respectively set to a relation expressed by t1 = t2.

A shown in Fig. 1, to the flow paths 17a to 17d, the lubricating oil is supplied from a lubricating unit not shown in the drawing. As the lubricating unit, an oil/air lubrication system is used that supplies the lubricating oil little by little by compressed air. The compressed air is sprayed to a part between the cage 14 and the inner ring 12 through the first flow path 17b and the third flow path 17d from the peripheral groove 17a to supply the lubricating oil and lubricate a part between the inner ring 12 and the cylindrical roller 13. Further, the lubricating unit sprays the compressed air to a part (a part between the guide surface 21 and the guided surface 22) between the outer spacer 15 and the cage 14 through the second flow path 17c from the peripheral groove 17a to supply the lubricating oil and mainly lubricate the part between them.

In Fig. 2, the compressed air passing through the second flow path 17c is discharged from the discharge opening 17c' and sprayed to the pair of side wall surfaces 23a in the annular groove 23. Namely, the pair of side wall surfaces 23a respectively form sprayed annular surfaces to which the compressed air is sprayed. Since the pair of side wall surfaces 23a are arranged to be inclined in the V shape, the cage 14 is supported at a prescribed position with respect to the axial direction by spraying the compressed air thereto.

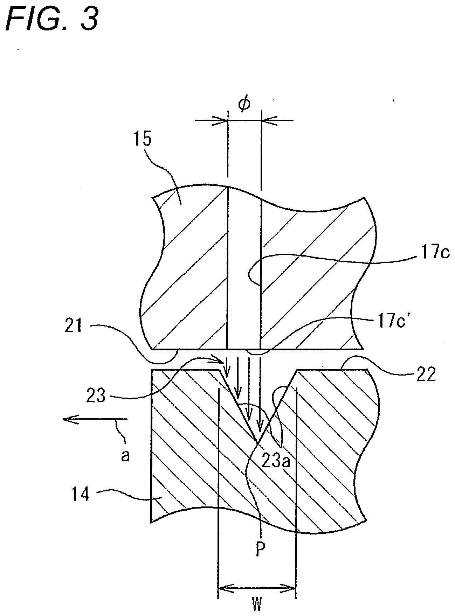

For instance, as shown in Fig. 3, when a central position P of the annular groove 23 in the direction of width is shifted rightward relative to the center of the discharge opening 17c', a flow rate of the compressed air sprayed to the side wall surface 23a of a left side is larger than that of the side wall surface 23a of a right side. Therefore, the cage 14 is moved leftward as shown by an arrow mark a by the compressed air sprayed to the side wall surface 23a of the left side. Then, as shown in Fig. 2, the cage 14 is supported at a position where the compressed air is equally sprayed to the pair of side wall surfaces 23a, that is, at a position where an axial force is balanced that is generated by the compressed air sprayed to the pair of side wall surfaces 23a.

By such an operation, an axial position of the cage 14 is stabilized so that the cylindrical roller 13 may be stably held. Further, the collision of the retained 14 and the cylindrical roller 13 with respect to the axial direction can be suppressed as much as possible, and an occurrence of abrasion or abnormal sound or the increase of a running torque can be prevented. Further, since the lubricating oil fed by the compressed air is supplied to the part between the guide surface 21 and the guided surface 22, an abrasion or seizure due to the contact of both the surfaces can be suppressed. Further, since the lubricating oil can be held in the annular groove 23, a lubricating state between the guide surface 21 and the guided surface 22 can be properly maintained. Further, since the compressed air is sprayed to the annular groove 23 of the cage 14, the cage 14 can be also stably supported with respect to the radial direction, a contact surface pressure of the guide surface 21 and the guided surface 22 can be lowered, a rotating resistance of the cage 14 can be reduced and the abrasion or the seizure can be more assuredly suppressed.

Since the guide surface 21 that guides the cage 14 is formed in the outer spacer 15 separate from the outer ring 11, the outer spacer 15 may be made of a material high in its heat radiation which is different from that of the outer ring 11 or the volume (mass) of the outer spacer 15 may be increased to improve the heat radiation. In such a way, the heat radiation of the outer spacer 15 is improved, so that the rise of temperature of the outer spacer 15 due to the contact with the cage 14 can be suppressed and the seizure of the cage 14 can be prevented.

The guide surface 21 formed in the outer spacer 15 is arranged inside the outer ring raceway surface 11a in the radial direction and nearer to the cage 14 side (in the inner ring raceway surface 12a side) than to the outer ring raceway surface 11a. Thus, the guide surface 21 can be allowed to come close to the guided surface 22 of the cage 14 and can guide the cage 14 without forming the guided surface 22 of the cage 14 in such a special configuration as to largely protrude outward in the radial direction.

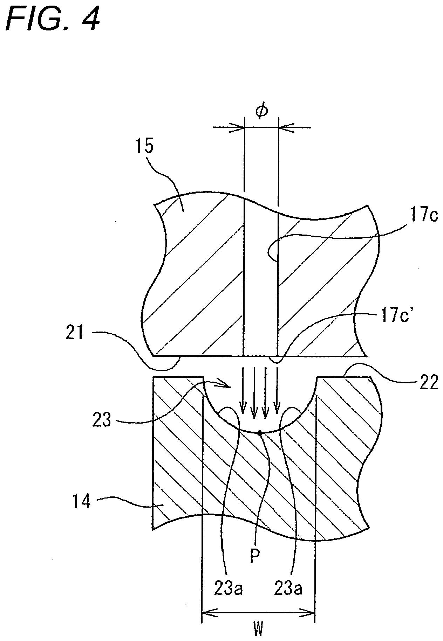

Fig. 4 is an enlarged sectional view of a main part of a rolling bearing according to a second exemplary embodiment of the present invention. In the present exemplary embodiment, an annular groove 23 is formed in a semi-circular arc shape. A pair of side wall surfaces 23a of the annular groove 23 are respectively formed in recessed circular arc shapes. The recessed circular arc shapes are connected together so as to be smoothly continuous in a groove bottom part P thereof. Accordingly, the pair of side wall surfaces 23a have parts inclined toward opposite directions to each other with respect to the axial direction. A distance W of an opening side of the pair of side wall surfaces 23a is formed to be larger than a diameter Ø of a discharge opening 17c' of a second flow path 17c and a distance of the pair of side wall surfaces 23a in the groove bottom part side is smaller than the diameter Ø and substantially 0. Accordingly, in the present exemplary embodiment, the same operational effects as those of the first exemplary embodiment are achieved.

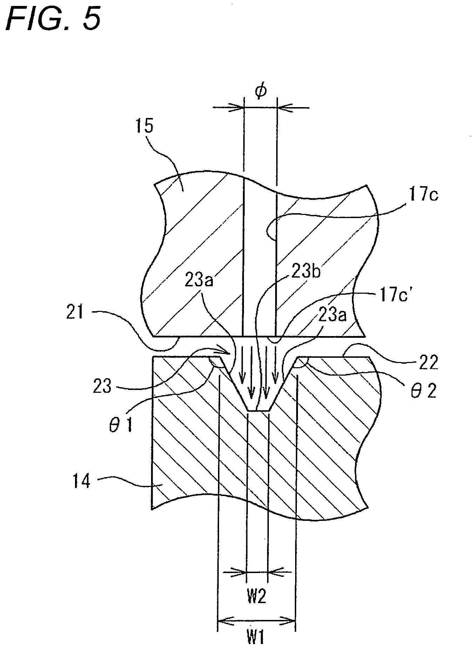

Fig. 5 is an enlarged sectional view of a main part of a rolling bearing according to a third exemplary embodiment of the present invention. The present exemplary embodiment is different from the first exemplary embodiment in view of a point that a groove bottom surface 23b that extends in the axial direction is formed on a groove bottom part of an annular groove 23. A distance between a pair of side wall surfaces 23a is W1 at a maximum in a part nearest to an opening side and W2 at a minimum in a part nearest to the groove bottom side. The width W1 and W2 of the annular groove 23 and a diameter Ø of a discharge opening 17c' are set to a relation expressed by W2 < Ø < W1. Accordingly, in the present exemplary embodiment, the same operational effects as those of the first exemplary embodiment are achieved.

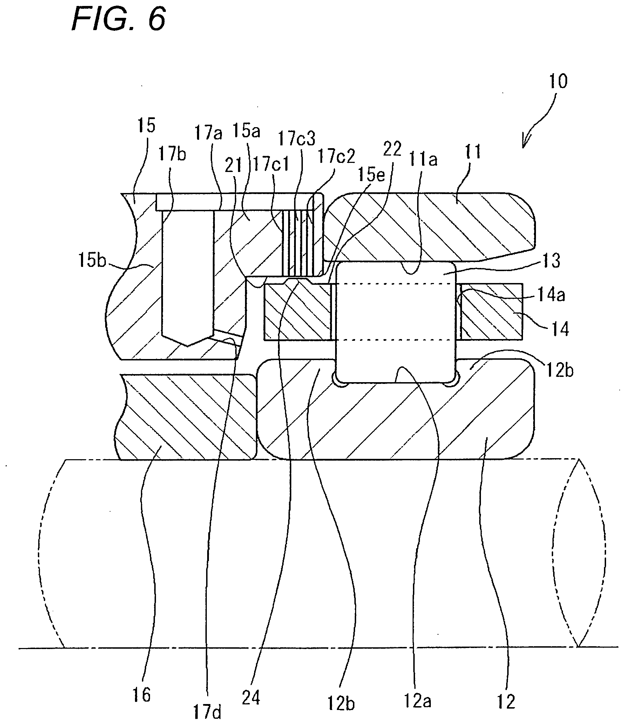

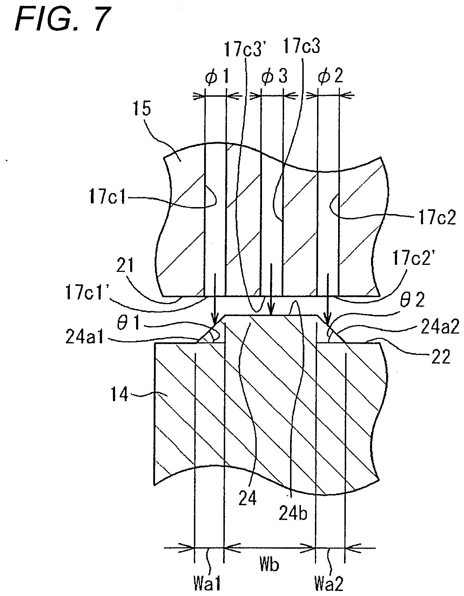

Fig. 6 is a sectional view of a rolling bearing 10 according to a fourth exemplary embodiment of the present invention. Fig. 7 is a sectional view showing an enlarged main part (the part of a guide surface 21 and a guided surface 22) of the rolling bearing in the exemplary embodiment and a state that an axis of the guide surface 21 corresponds to an axis of the guided surface 22.

The rolling bearing 10 of the present exemplary embodiment corresponds to that of the first exemplary embodiment (see Fig. 1) except a structure of the second flow path 17c for supplying the lubricating oil by the compressed air and a structure of the sprayed surface to which the compressed air is sprayed. Accordingly, structures corresponding to those of the first exemplary embodiment are designated by the same reference numerals and a detailed explanation thereof will be omitted. Further, a description of operational effects obtained in accordance with the same structures as those of the first exemplary embodiment will be also omitted.

As shown in Fig. 6 and Fig. 7, second flow paths 17c1 to 17c3 of the present exemplary embodiment have their discharge openings 17c1' to 17c3' arranged so as to oppose a protruding part 24 formed on the guided surface 22.

The protruding part 24 is formed in an annular shape along the circumferential direction of a cage 14 and a sectional form passing an axis of the cylindrical roller bearing 10 is substantially trapezoid. The protruding part 24 includes a pair of side wall surfaces 24a1 and 24a2 inclined in opposite directions to each other so that a width is gradually narrower to a top part side from a base part side and a top surface 24b. Widths Wa1 and Wa2 of the side wall surfaces 24a1 and 24a2 in the axial direction are respectively substantially the same and inclination angles θ1 and θ2 of the side wall surfaces relative to the guided surface 22 are substantially the same.

The top surface 24b is a surface parallel to the guided surface 22 between the pair of side wall surfaces 24a1 and 24a2. Further, the pair of side wall surfaces 24a1 and 24a2 or the top surface 24b of the protruding part 24 are set as sprayed surfaces to which compressed air discharged from the second flow paths 17c1 to 17c3 is sprayed. The guided surface 22 slidably contacts the guide surface 21 mainly in the top surface 24b of the protruding part 24 and is guided by the guide surface 21.

As shown in Fig. 7, as the second flow paths 17c1 to 17c3 of the present exemplary embodiment, three second flow paths are formed so as to be arranged in the axial direction on a prescribed section passing the axis of the cylindrical roller bearing 10. Further, as the second flow paths 17c1 to 17c3, on an entire circumference of the cylindrical roller bearing 10, three rows of the flow paths are arranged in the axial direction and each of the rows has a plurality of flow paths.

The three second flow paths 17c1 to 17c3 include two second flow paths 17c1 and 17c2 provided at both sides in the axial direction with the discharge openings 17c1' and 17c2'formed so as to oppose the pair of side wall surfaces 24a1 and 24a2 of the protruding part 24 and one second flow path 17c3 provided at a center in the axial direction with the discharge opening 17c3' formed so as to be oppose the top surface 24b of the protruding part 24. The second flow paths 17c1 to 17c3 are respectively arranged at substantially equal intervals with respect to the axial direction.

Dimensions are respectively set so that diameters Ø1 and Ø2 of the second flow paths 17c1 and 17c2 at both sides in the axial direction are the same and slightly smaller than the widths Wa1 and Wa2 of the side wall surfaces 24a1 and 24a2 respectively corresponding thereto and substantially all the compressed air discharged respectively from the discharge openings 17c1' and 17c2'is sprayed to the side wall surfaces 24a1 and 24a2. A diameter Ø3 of the second flow path 17c3 at the center in the axial direction may be the same as or different from the diameters Ø1 and Ø2 of the second flow paths 17c1 and 17c2 at both the sides.

In Fig. 7, the compressed air passing through the second flow paths 17c1 and 17c2 at both the sides in the axial direction is sprayed to the pair of side wall surfaces 24a1 and 24a2 of the protruding part 24. Since the pair of side wall surfaces 24a1 and 24a2 are inclined to the opposite directions to each other, the cage 14 is supported at a prescribed position in the axial direction by a force receiving from the compressed air. Namely, when the compressed air discharged from the second flow path 17c1 in a left side is sprayed to the side wall surface 24a1 in a left side, the cage 14 receives a rightward force. On the contrary, when the compressed air discharged from the second flow path 17c2 of a right side is sprayed to the side wall surface 24a2 in a right side, the cage 14 receives a leftward force and the retained 14 is supported at a position where these forces are balanced. Further, cage 14 is supported with respect to the radial direction by the compressed air discharged from the second flow paths 17c1 and 17c2 at both the sides in the axial direction.

The compressed air passing through the second flow path 17c3 at the center in the axial direction is sprayed to the top surface 24b of the protruding part 24. Thus, the cage 14 is supported with respect to the radial direction. Especially, since the compressed air discharged from the second flow path 17c3 at the center in the axial direction hardly leaks to both the sides in the axial direction by the compressed air discharged from the second flow paths 17c1 and 17c2 at both the sides in the axial direction, the cage 14 can be strongly supported with respect to the radial direction.

As described above, an axial position of the cage 14 is stabilized by the compressed air discharged from the second flow paths 17c1 and 17c2, the collision of the retained 14 and a cylindrical roller 13 can be suppressed as much as possible, and an occurrence of abrasion or abnormal sound or the increase of a running torque can be prevented. Further, since lubricating oil fed by the compressed air is supplied to a part between the guide surface 21 and the guided surface 22, an abrasion or seizure due to the contact of both the surfaces can be suppressed. Further, since the compressed air is sprayed to the protruding part 24 of the cage 14, the cage can be stably supported with respect to the radial direction. Especially, since the cage 14 can be strongly supported with respect to the radial direction n by the compressed air discharged from the second flow path 17c3 at the center in the axial direction, a contact surface pressure of the guide surface 21 and the guided surface 22 can be lowered, a rotating resistance of the cage 14 can be reduced and the abrasion or the seizure can be prevented.

Further, since the compressed air discharged from the two discharge openings 17c1' and 17c2' which separate in the axial direction is sprayed to the pair of side wall surfaces 24a1 and 24a2, the cage 14 is hardly inclined with respect to the radial direction to stabilize the rotation of the cage 14. Further, the cage 14 can be prevented from coming into contact with an inner peripheral corner part 15e of an outer spacer 15 of an outer ring 11 side (an end edge of the guide surface 21 in the outer ring 11 side; see Fig, 6) to be worn.

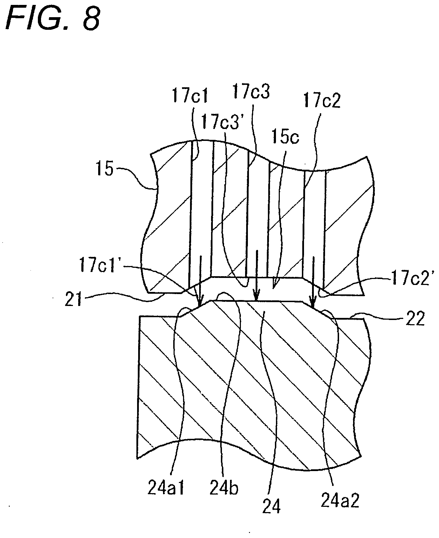

Fig. 8 is an enlarged sectional view of a main part of a rolling bearing according to a fifth exemplary embodiment of the present invention and shows a state that an axis of a guide surface 21 corresponds to an axis of a guided surface 22. The present exemplary embodiment is different from the fourth exemplary embodiment (see Fig. 7) in view of a point that a recessed groove 15c adapted to a shape of a protruding part 24 is formed on the guide surface 21 correspondingly to an outer side of the protruding part 24 in the radial direction, and corresponds to the fourth exemplary embodiment in view of other points. In the present exemplary embodiment, not only the same operational effects as those of the fourth exemplary embodiment are achieved, but also the protruding part 24 is fitted to the recessed groove 15c without coming into contact therewith when the guide surface 21 comes close to the guided surface 22 in the radial direction so that a cage 14 may be more assuredly supported with respect to an axial direction.

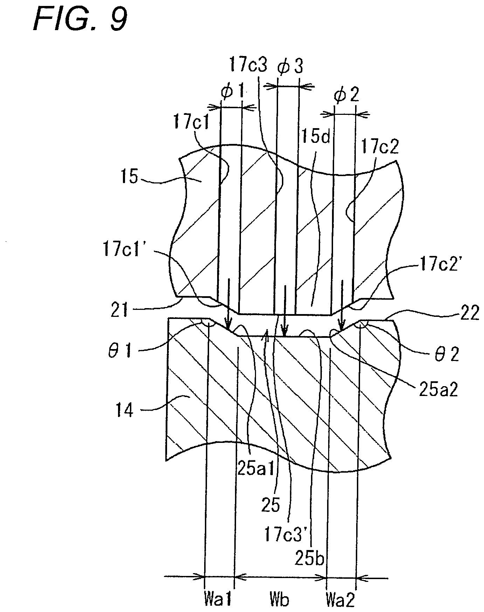

Fig. 9 is an enlarged sectional view of a main part of a rolling bearing according to a sixth exemplary embodiment of the present invention and shows a state that an axis of a guide surface 21 corresponds to an axis of a guided surface 22. In the present exemplary embodiment, a protruding part 24 is not formed on the guided surface 22 and an annular groove 25 is formed in place thereof. The annular groove 25 is formed substantially in the shape of trapezoid and includes a pair of side wall surfaces 25a1 and 25a2 inclined in opposite directions to each other so that a width is gradually narrower to a groove bottom side from n opening side and a groove bottom surface 25b. In the pair of side wall surfaces 25a1 and 25a2, widths Wa1 and Wa2 in the axial direction and inclination angles θ1 and θ2 relative to the guided surface 22 are respectively the same. The groove bottom surface 25b is a surface parallel to the guided surface 22 between the pair of side wall surfaces 25a1 and 25a2.

Further, on the guide surface 21, a protruding part 15d that has substantially the shape of trapezoid adapted to the shape of the annular groove 25 is formed in an annular shape along the circumferential direction correspondingly to an outer side of the annular groove 25 in the radial direction.

In the present exemplary embodiment, compressed air discharged from second flow paths 17c1 and 17c2 at both sides in the axial direction is sprayed respectively to the pair of side wall surfaces 25a1 and 25a2 of the annular groove 25, so that a cage 14 is supported with respect to the axial direction, and further, with respect to the radial direction. Further, the compressed air discharged from a second flow path 17c3 at a center in the axial direction is sprayed to the groove bottom surface 25b of the annular groove 25, so that the cage 14 can be strongly supported with respect to the radial direction. Further, the protruding part 15d formed on the guide surface 21 is fitted to the annular groove 25 without coming into contact therewith when the guide surface 21 comes close to the guided surface 22 in the radial direction so that the cage 14 may be more assuredly supported with respect to the axial direction.

In the present exemplary embodiment, the guide surface 21 may be formed as a flat surface without forming the protruding part 15d.

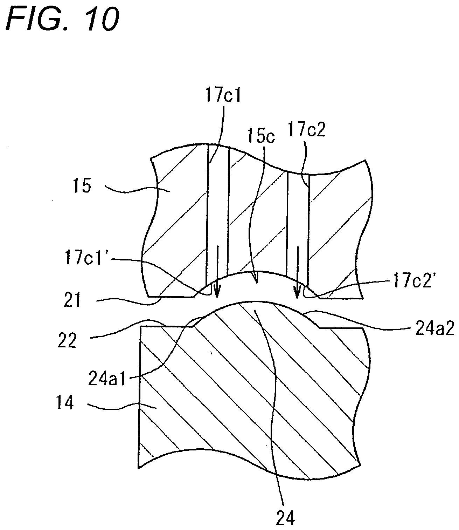

Fig. 10 is an enlarged sectional view of a main part of a rolling bearing according to a seventh exemplary embodiment of the present invention and shows a state that an axis of a guide surface 21 corresponds to an axis of a guided surface 22. The present exemplary embodiment is different from the fourth and fifth exemplary embodiments (see Fig. 7 and Fig. 8) in view of a point that a second flow path 17c3 at a center in the axial direction is saved and a protruding part 24 formed in the guided surface 22 has a circular arc shape in section, and different from the fifth exemplary embodiment in view of a point that a recessed groove 15c formed in the guide surface 21 has a circular arc shape in section adapted to the protruding part 24. Also in this exemplary embodiment, a pair of side wall surfaces 24a1 and 24a2 of the annular protruding part 24 have parts inclined in opposite directions to each other with respect to the axial direction. Other structures are the same as those of the fourth and fifth exemplary embodiments and operational effects substantially the same as those of these exemplary embodiments are achieved.

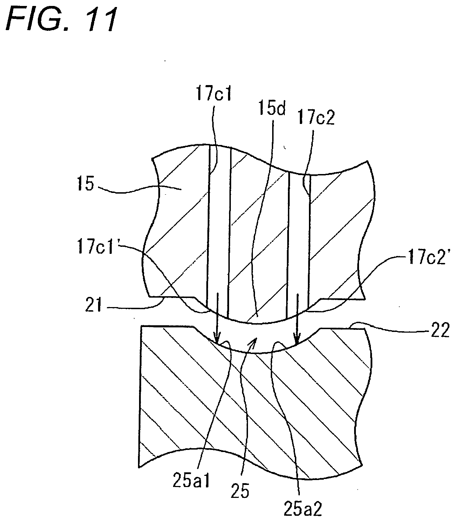

Fig. 11 is an enlarged sectional view of a main part of a rolling bearing according to an eighth exemplary embodiment of the present invention and shows a state that an axis of a guide surface 21 corresponds to an axis of a guided surface 22. The present exemplary embodiment is different from the sixth exemplary embodiment (see Fig. 9) in view of points that a second flow path 17c3 at a center in the axial direction is saved, an annular groove 25 formed in the guided surface 22 has a circular arc shape in section and a protruding part 15d formed in the guide surface 21 has a circular arc shape in section adapted to the annular groove 25. Also in this exemplary embodiment, a pair of side wall surfaces 25a1 and 25a2 of the annular groove 25 have parts inclined in opposite directions to each other with respect to the axial direction. Other structures are the same as those of the sixth exemplary embodiment and operational effects substantially the same as those of the sixth exemplary embodiment are achieved.

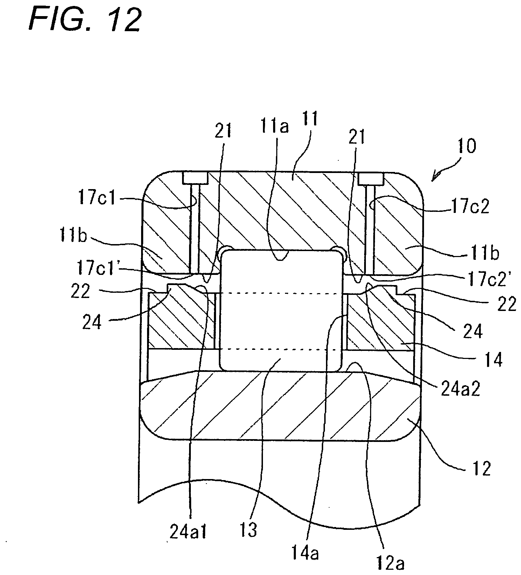

Fig. 12 is a sectional view of a rolling bearing according to a ninth exemplary embodiment of the present invention. In the present exemplary embodiment, outer ring collar parts 11b are formed at both sides of an outer ring raceway surface 11a of an outer ring 11 in the axial direction. In the outer ring 11, flow paths 17c1 and 17c2 of compressed air are formed which have discharge openings 17c1' and 17c2' respectively in inner peripheral surfaces of the outer ring collar parts 11b. The inner peripheral surfaces of the outer ring collar parts 11b serve as guide surfaces 21 for guiding a cage 14.

On the other hand, outer peripheral surfaces of the cage 14 at both sides in the axial direction that hold a cylindrical roller 13 serve as guided surfaces 22 opposing the guide surfaces 21 such that the guided surfaces 22 can slidably contact the guide surfaces 21. On the guided surfaces 22 respectively, annular protruding parts 24 are formed along the circumferential direction. Each protruding part 24 has a substantially trapezoid shape in section similarly to the fourth exemplary embodiment. Side wall surfaces 24a1 and 24a2 in inner sides of the protruding parts 24 (the cylindrical roller 13 side) in the axial direction respectively oppose the discharge openings 17c1' and 17c2' of the flow paths 17c1 and 17c2. The side wall surface 24a1 of the one protruding part 24 and the side wall surface 24a2 of the other protruding part 24 are formed to be surfaces inclined in opposite directions to each other which are gradually directed inward in the radial direction as they go inward in the axial direction.

Also in the present exemplary embodiment, when the compressed air passing through the flow paths 17c1 and 17c2 is sprayed respectively to the side wall surfaces (sprayed surfaces) 24a1 and 24a2 of the protruding parts 24, the cage 14 is supported with respect to the axial direction and further supported with respect to the radial direction.

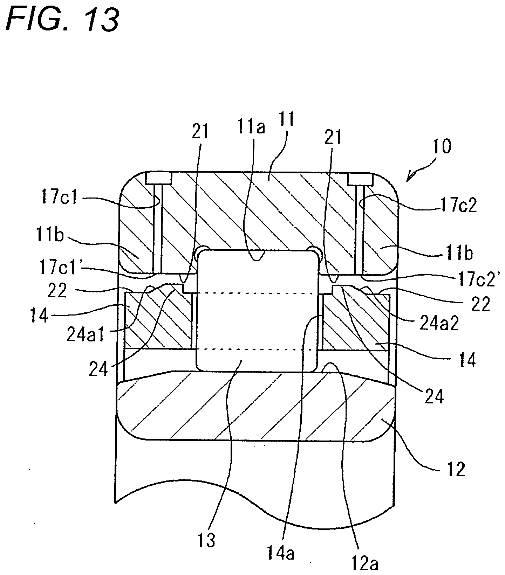

Fig. 13 is a sectional view of a rolling bearing according to a tenth exemplary embodiment of the present invention. In the present exemplary embodiment, side wall surfaces (sprayed surfaces) 24a1 and 24a2 of outer sides (sides opposite to a cylindrical roller 13) of protruding parts 24 in the axial direction respectively oppose discharge openings 17c1' and 17c2' of flow paths 17c1 and 17c2. The side wall surfaces 24a1 and 24a2 are respectively formed to be surfaces inclined in opposite directions to each other which are gradually directed inward in the radial direction as they go outward in the axial direction. Accordingly, also in the present exemplary embodiment, operational effects the same as those of the ninth exemplary embodiment (see Fig. 12) are achieved.

In the present exemplary embodiment, compressed air sprayed to the side wall surfaces 24a1 and 24a2 flows outward in the axial direction due to their inclination. However, in the above-described ninth exemplary embodiment, the compressed air flows inward in the axial direction (to the cylindrical roller 13 side) due to the inclination of the side wall surfaces 24a1 and 24a2. Thus, lubricating oil is easily supplied to a part between the outer ring 11 and the cylindrical roller 13. Accordingly, the ninth exemplary embodiment is more advantageous in this point.

The present invention is not limited to the above-described embodiments and may suitably change a design.

For instance, in the exemplary embodiments respectively, the inclination angles θ1 and θ2 of the pair of side wall surfaces (the sprayed surfaces) 23a, 25a1, 25a2, 24a1 and 24a2 in the annular grooves 23, 25 or the protruding part 24 relative to the guided surface 22 may be different from each other.

Further, the guide surface 21 may be formed in the outer ring 11. In this case, in the inner peripheral parts of the outer ring 11, collar parts may be formed for regulating the movement of a cylindrical roller 13 in the axial direction and the inner peripheral parts of the collar parts may serve as guide surfaces.

In the first to third exemplary embodiments, a plurality of sets of the annular grooves 23 and the second flow paths 17c may be provided in the axial direction.

In the fourth to tenth exemplary embodiments, the second flow paths 17c1 and 17c2 at both the sides in the axial direction may be formed to be inclined so that the compressed air may be sprayed in the vertical direction to the pair of side wall surfaces 24a1, 24a2, 25a1 and 25a2. Further, in the fourth to sixth exemplary embodiments, the second flow paths 17c3 at the center in the axial direction may be saved. In this case, circumferential positions of the second flow paths 17c1 and 17c2 at both the sides in the axial direction may be formed to be shifted.

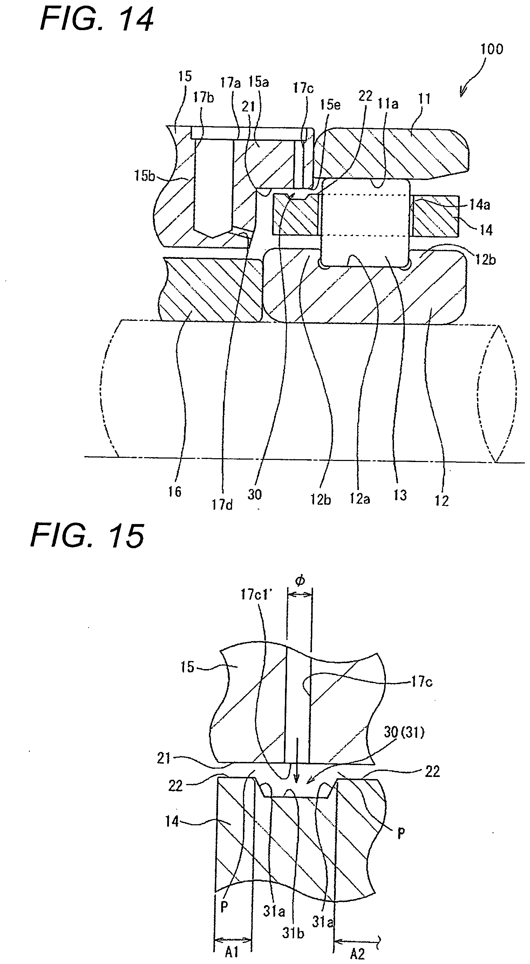

Fig. 14 is a sectional view of a rolling bearing 100 according to an eleventh exemplary embodiment of the present invention. Parts having the same structures as those of the rolling bearing 10 according to the first exemplary embodiment are designated by the same reference numerals and an explanation of them will be omitted.

Fig. 15 is a sectional view showing an enlarged main part (a part of a guide surface 21 and a guided surface 22) of the cylindrical roller bearing 100. A second flow path 17 is arranged so that a discharge opening 17c1 thereof opposes an annular groove 31 formed in the guided surface 22.

The annular groove 31 is formed along the circumferential direction of a cage 14 and a form of a section passing an axis of the cylindrical roller bearing 100 is substantially trapezoid. An opening of the annular groove 31 has a width in the axial direction larger than a diameter (a diameter of the discharge opening 17c1) Ø of the second flow path 17c, and the annular groove 31 includes a pair of side wall surfaces 31a inclined in opposite directions to each other so that a width is gradually narrower to a groove bottom side from the opening side and a bottom surface 31b. Widths of the side wall surfaces 31a in the axial direction are respectively substantially the same and inclination angles of the side wall surfaces relative to the guided surface 22 are substantially the same. The bottom surface 31b of the annular groove 31 is a surface parallel to the guided surface 22 between the pair of side wall surfaces 31a. Further, the bottom surface 31b is arranged to oppose the discharge opening 17c1 of the second flow path 17c. A distance between the bottom surface 31b and the guide surface 21 in the radial direction is larger than a a distance between the guide surface 21 and the guided surface 22 in the radial direction. The distance between the guide surface 21 and the guided surface 22 in the radial direction is set to about 0.2 to 0.5 mm.

The annular groove 31 substantially parts the guided surface 22 in the axial direction. Thus, opposing areas A1 and A2 of the guided surface 22 and the guide surface 21 are parted and arranged in the axial direction with the annular groove 31 sandwiched between them.

The annular groove 31 forms a buffer area (a buffer space) 30 having a flow area of compressed air larger than that of the second flow path 17c. The compressed air passing through the second flow path 17c enters the buffer area 30 so that its pressure is reduced. Then, when the compressed air that enters the buffer area 30 flows to the opposing areas A1 and A2 at both sides in the axial direction, its pressure is increased at positions P where the distance between the cage 14 and the outer spacer 15 in the radial direction is decreased. Namely, at the two positions P at both the sides of the buffer area 30 separate in the axial direction, the pressure of the compressed air is increased.

In accordance with this operation, the cage 14 is hardly inclined in the radial direction and a position of the cage 14 can be stabilized with respect to the radial direction. Further, a contact surface pressure of the guide surface 21 and the guided surface 22 can be lowered, a rotating resistance of the cage 14 can be reduced and an abrasion or seizure due to the contact of the guide surface 21 and the guided surface 22 can be suppressed. Further, since the cage 14 is hardly inclined in the radial direction, the cage 14 can be prevented from coming into contact with an inner peripheral corner part(an end edge of the guide surface 21 in an outer ring 11 side) 15e (see Fig. 14) of an outer spacer 15 of the outer ring 11 side to be worn.

Since the guide surface 21 that guides the cage 14 is formed in the outer spacer 15 separate from the outer ring 11, the outer spacer 15 may be made of a material high in its heat radiation which is different from that of the outer ring 11 or the volume (mass) of the outer spacer 15 may be increased to improve the heat radiation. In such a way, the heat radiation of the outer spacer 15 is improved, so that the rise of temperature of the outer spacer 15 due to the contact with the cage 14 can be suppressed and the seizure of the cage 14 can be prevented.

The guide surface 21 formed in the outer spacer 15 is arranged inside an outer ring raceway surface 11a in the radial direction and nearer to the cage 14 side (in an inner ring raceway surface 12a side) than to the outer ring raceway surface 11a. Thus, the guide surface 21 can be allowed to come close to the guided surface 22 of the cage 14 and can guide the cage 14 without forming the guided surface 22 of the cage 14 in such a special configuration as to largely protrude outward in the radial direction.

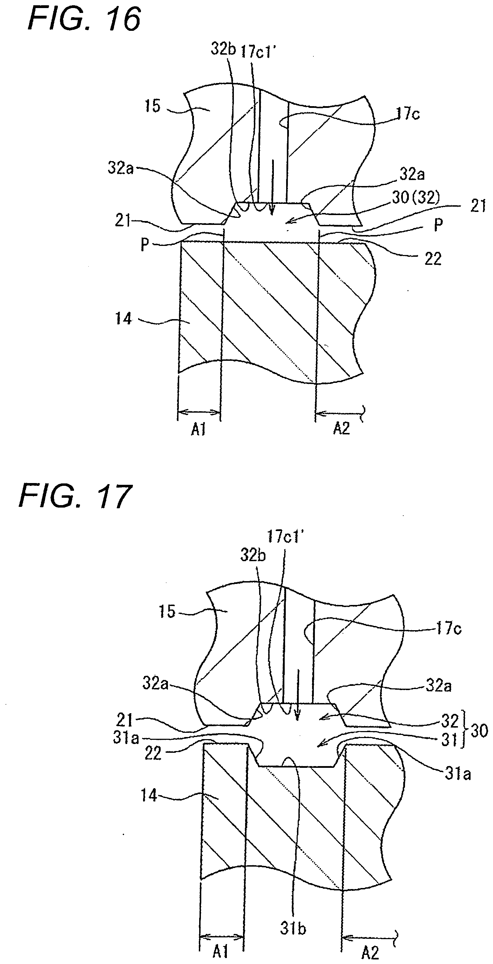

Fig. 16 is an enlarged sectional view of a main part of a rolling bearing according to a twelfth exemplary embodiment of the present invention. In the present exemplary embodiment, a recessed groove 32 is formed in a guide surface 21 and a buffer area 30 is formed by the recessed groove 32. The recessed groove 32 is formed along the circumferential direction of an outer spacer 15 and substantially parts the guide surface 21 in the axial direction. Thus, opposing areas A1 and A2 of the guide surface 21 and a guided surface 22 are parted and arranged in the axial direction with the recessed groove 32 sandwiched between them.

A form of a section of the recessed groove 32 passing an axis of the cylindrical roller bearing 100 is substantially trapezoidal. The recessed groove 32 includes a pair of side wall surfaces 32a inclined in opposite directions to each other so that a width is gradually narrower to a groove bottom side from an opening side and a bottom surface 32b. Widths of the side wall surfaces 32a in the axial direction are respectively substantially the same and inclination angles of the side wall surfaces relative to the guide surface 21 are substantially the same. The bottom surface 32b of the recessed groove 32 is a surface parallel to the guide surface 21 between the pair of side wall surfaces 32a.

To the bottom surface 32b of the recessed groove 32, a discharge opening 17c1 of a second flow path 17c is opened. The recessed groove 32 is formed to have an opening width larger than a diameter of the second flow path 17c (a diameter of the discharge opening 17c1). A distance to the guided surface 22 from the bottom surface 32b of the recessed groove 32 is set to be larger than a distance between the guide surface 21 and the guided surface 22.

The recessed groove 32 forms the buffer area 30 having a flow area of compressed air larger than that of the second flow path 17c. In the present exemplary embodiment, the compressed air passing through the second flow path 17c enters the buffer area 30 so that its pressure is reduced. Further, when the compressed air flows to the opposing areas A1 and A2 of the guide surface 21 and the guided surface 22 from the buffer area 30, its pressure is increased at two positions P separate in the axial direction. Accordingly, the present exemplary embodiment achieves the same operational effects as those of the eleventh exemplary embodiment.

In the present exemplary embodiment, the recessed groove 32 does not necessarily need to be formed continuously in all the circumference of the outer spacer 15 and the recessed groove may be formed correspondingly to a part in which at least the second flow path 17c is formed.

Fig. 17 is an enlarged sectional view of a main part of a rolling bearing according to a thirteenth exemplary embodiment of the present invention. In the present exemplary embodiment, the above-described eleventh exemplary embodiment is combined with the twelfth exemplary embodiment. Namely, in the present exemplary embodiment, an annular groove 31 is formed in a guided surface 22 and a recessed groove 32 is formed in a guide surface 21 and a buffer area 30 is formed by the annular groove 31 and the recessed groove 32. The annular groove 31 and the recessed groove 32 have substantially the same width in the axial direction and substantially the same depth of the groove. However, these dimensions may be different from each other.

In the present exemplary embodiment, not only the same operational effects as those of the above-described eleventh and twelfth exemplary embodiments can be achieved, but also, the flow area of compressed air in the buffer area 30 can be increased.

The present invention is not limited to the above-described exemplary embodiments respectively and a design may be suitably changed. For instance, a guide surface 21 may be formed in an outer ring 11. In this case, a collar part may be formed for regulating an axial movement of a cylindrical roller 13 in an inner peripheral part of the outer ring 11 and an inner peripheral surface of the collar part may be used as the guide surface 21. Further, in the exemplary embodiments respectively, inclination angles of a pair of side wall surfaces 31a or 32a of an annular groove 31 or a recessed groove 32 relative to a guided surface 22 or a guide surface 21 may be different from each other.

Further, in the exemplary embodiments respectively, a second flow path 17c, a guided surface 22, a guide surface 21, an annular groove 31 and a recessed groove 32 (a buffer area 30) may be provided at both sides in the axial directions with a cylindrical roller 13 sandwiched between them. However, the present invention is very advantageous to prevent a cage 14 from being inclined in a cylindrical roller bearing 100 having a second flow path 17c, a guided surface 22 and a guide surface 21 provided only in one side in the axial direction.

Further, in the exemplary embodiments respectively, as the lubricating unit, the oil/air lubrication system is exemplified. However, the present invention may employ any lubrication system that supplies lubricating oil by using compressed air without a special limitation. For instance, other lubrication system such as an oil/mist lubrication system may be employed that supplies mist type lubricating oil by compressed air.

The present invention may be applied to a rolling bearing in which a guide form of a cage is a guide form by an inner ring. Further, the present invention may be applied to other rolling bearings than a cylindrical roller bearing such as a ball bearing, a needle shaped roller bearing and a tapered roller bearing.

## Claims

1. A rolling bearing comprising:
a first raceway member (12) having a first annular raceway surface;
a second raceway member (11) having a second annular raceway surface opposing the first raceway surface;
a guide member (15) having an annular guide surface (21) arranged at a position different from the second raceway surface in an axial direction and formed integrally with or separately from the second raceway member (11);
a plurality of rolling elements (13) arranged between the first raceway surface and the second raceway surface so as to roll; and
an annular cage (14) that holds the plurality of rolling elements (13) at given intervals in the circumferential direction and has a guided surface (22) opposing the guide surface (21) such that the guided surface can slidably contact the guide surface,
wherein a flow path (17) for compressed air for supplying lubricating oil is provided in the guide member (15),
wherein the flow path (17) has a discharge opening (17c') in the guide surface,
wherein the guided surface has two annular sprayed surfaces (23, 23a, 24a1, 24a2, 24b, 25a1, 25a2) to which the compressed air discharged from the discharge opening (17c') is sprayed, and
wherein the sprayed surfaces (23, 23a, 24a1, 24a2, 24b, 25a1, 25a2) are defined as inclined surfaces inclined to opposite directions to each other with respect to the axial direction, wherein the cage (14) is supported with respect to the axial direction by a force acting on the cage (14) in the axial direction obtained by spraying the compressed air to each of the sprayed surfaces (23, 23a, 24a1, 24a2, 24b, 25a1, 25a2).

2. The rolling bearing according to claim 1,
wherein the guided surface has an annular groove (23, 25) formed along the circumferential direction,
wherein the flow path has the discharge opening (17c') opened in the guide surface and configured to discharge the compressed air in the radial direction,
wherein the discharge opening (17c') is arranged so as to oppose the annular groove (23, 25) in the radial direction within an opening width of the annular groove (23, 25),
wherein the annular groove (23, 25) has a pair of side wall surfaces as the sprayed surfaces which are inclined to the opposite directions to each other with respect to the axial direction such that a distance between the pair of side wall surfaces is gradually decreased from an opening side of the groove (23, 25) to a groove bottom side, and
wherein the distance between the pair of opposing side wall surfaces is set larger than a diameter of the discharge opening (17c') in an opening edge of the groove (23, 25) and smaller than the diameter of the discharge opening (17c') at the groove bottom.

3. The rolling bearing according to claim 2,
wherein the cage (14) is movable within a given range in the axial direction, and wherein dimensions of a diameter of the discharge opening (17c') and an opening width of the annular groove (23, 25) are set such that the discharge opening (17c') opposes the annular groove (23, 25) within the opening width of the annular groove (23, 25) even when the cage (14) is moved in the axial direction.

4. The rolling bearing according to claim 1 or 2,
wherein the flow path has at least two discharge openings (17c') separate from one another in the axial direction in the guide surface, and
wherein the guided surface has two annular sprayed surfaces to which the compressed air discharged from the two discharge openings is respectively sprayed.

5. The rolling bearing according to claim 4,
wherein the two discharge openings (17c') are arranged in parallel in the axial direction, and
wherein the flow path has other discharge opening between the two discharge openings.

6. The rolling bearing according to claim 4 or 5,
wherein one of the two discharge openings (17c') is arranged on one side of the rolling element (13) in the axial direction, and
wherein the other of the two discharge openings (17c') may be arranged on the other side of the rolling element (13) in the axial direction.

7. The rolling bearing according to any one of claims 1 to 6,
wherein the guide member (15) comprises a spacer (15) arranged adjacent to the second raceway member (11).

8. The rolling bearing according to any one of claims 1 to 7,
wherein the guide surface is arranged in the first raceway surface side than in the second raceway surface with respect to the radial direction.

## Patentansprüche

1. Wälzlager, umfassend:
- ein erstes Laufringelement (12) mit einer ersten ringförmigen Laufringfläche;
- ein zweites Laufringelement (11) mit einer zweiten ringförmigen Laufringfläche, die der ersten Laufringfläche gegenüberliegt;
- ein Führungselement (15) mit einer ringförmigen Führungsfläche (21), die an einer Position, die sich von der zweiten Laufringfläche unterscheidet, in einer axialen Richtung angeordnet ist, und einstückig mit dem zweiten Laufringelement (11) ausgebildet oder von diesem getrennt ist;
- eine Mehrzahl von Wälzkörpern (13), die zwischen der ersten Laufringfläche und der zweiten Laufringfläche angeordnet sind, um zu rollen; und
- einen ringförmigen Käfig (14), der die Mehrzahl von Wälzkörpern (13) in vorgegebenen Intervallen in die Umfangsrichtung hält und eine geführte Fläche (22) aufweist, die der Führungsfläche (21) gegenüberliegt, so dass die geführte Fläche gleitbeweglich die Führungsfläche kontaktieren kann,
- wobei ein Strömungskanal (17) für komprimierte Luft zum Zuführen von Schmieröl im Führungselement (15) vorgesehen ist,
- wobei der Strömungskanal (17) eine Abgabeöffnung (17c') in der Führungsfläche aufweist,
- wobei die geführte Fläche zwei ringförmige zu besprühende Flächen (23, 23a, 24a1, 24a2, 24b, 25a1, 25a2) aufweist, auf die die komprimierte Luft, die von der Abgabeöffnung (17c') abgegeben wird, gesprüht wird, und
- wobei die zu besprühenden Flächen (23, 23a, 24a1, 24a2, 24b, 25a1, 25a2) als geneigte Flächen ausgebildet sind, die zueinander in entgegengestzten Richtungen bezüglich der axialen Richtung geneigt sind, wobei der Käfig (14) bezüglich der axialen Richtung durch eine Kraft abgestützt wird, die auf den Käfig (14) in die axiale Richtung wirkt, die durch Sprühen der komprimierten Luft auf jede der zu besprühenden Flächen (23, 23a, 24a1, 24a2, 24b, 25a1, 25a2) erhalten wird.

2. Wälzlager gemäß Anspruch 1,
- wobei die geführte Fläche eine ringförmige Nut (23, 25) aufweist, die entlang der Umfangsfläche ausgebildet ist,
- wobei der Strömungskanal die Abgabeöffnung (17c') aufweist, die in die Führungsfläche geöffnet ist, und eingerichtet ist, um die komprimierte Luft in die radiale Richtung abzugeben,
- wobei die Abgabeöffnung (17c') angeordnet ist, um der ringförmigen Nut (23, 25) in die radiale Richtung innerhalb einer Öffnungsbreite der ringförmigen Nut (23, 25) gegenüber zu liegen,
- wobei die ringförmige Nut (23, 25) ein Paar von Seitenwandflächen als zu besprühende Flächen aufweist, die zueinander in die entgegengesetzten Richtungen bezüglich der axialen Richtung geneigt sind, so dass ein Abstand zwischen dem Paar von Seitenwandflächen allmählich von einer Öffnungsseite der Nut (23, 25) zu einer Nutbodenseite verringert wird, und
- wobei der Abstand zwischen dem Paar von gegenüberliegenden Seitenwandflächen größer als ein Durchmesser der Abgabeöffnung (17c') in eine Öffnungskante der Nut (23, 25) und kleiner als der Durchmesser der Abgabeöffnung (17c') am Nutboden festgelegt wird.

3. Wälzlager gemäß Anspruch 2,
- wobei der Käfig (14) innerhalb eines vorgegebenen Bereichs in die axiale Richtung beweglich ist, und
- wobei Dimensionen eines Durchmessers der Abgabeöffnung (17c') und eine Öffnungsbreite der ringförmigen Nut (23, 25) so festgelegt sind, dass die Abgabeöffnung (17c') der ringförmigen Nut (23, 25) innerhalb der Öffnungsbreite der ringförmigen Nut (23, 25) gegenüberliegt, auch wenn der Käfig (14) in die axiale Richtung bewegt wird.

4. Wälzlager gemäß Anspruch 1 oder 2,
- wobei der Strömungskanal zumindest zwei Abgabeöffnungen (17c') aufweist, die voneinander in die axiale Richtung in der Führungsfläche getrennt sind, und
- wobei die geführte Fläche zwei ringförmige zu besprühende Flächen aufweist, auf die die komprimierte Luft, die von den beiden Abgabeöffnungen abgegeben wird, jeweils gesprüht wird.

5. Wälzlager gemäß Anspruch 4,
- wobei die beiden Abgabeöffnungen (17c') parallel in die axiale Richtung angeordnet sind, und
- wobei der Strömungskanal eine weitere Abgabeöffnung zwischen den beiden Abgabeöffnungen aufweist.

6. Wälzlager gemäß Anspruch 4 oder 5,
- wobei eine der beiden Abgabeöffnungen (17c') auf einer Seite des Wälzkörpers (13) in die axiale Richtung angeordnet ist, und
- wobei die andere der beiden Abgabeöffnungen (17c') auf der anderen Seite des Wälzkörpers (13) in die axiale Richtung angeordnet werden kann.

7. Wälzlager gemäß einem der Ansprüche 1 bis 6,
- wobei das Führungselement (15) einen Abstandshalter (15) aufweist, der benachbart zum zweiten Laufringelement (11) angeordnet ist.

8. Wälzlager gemäß einem der Ansprüche 1 bis 7,
- wobei die Führungsfläche in der ersten Laufringflächenseite eher als in der zweiten Laufringfläche bezüglich der radialen Richtung angeordnet ist.

## Revendications

1. Palier à roulement comprenant :
un premier élément de chemin de roulement (12) ayant une première surface de chemin de roulement annulaire ;
un deuxième élément de chemin de roulement (11) ayant une deuxième surface de chemin de roulement annulaire opposée à la première surface de chemin de roulement ;
un élément de guidage (15) ayant une surface de guidage annulaire (21) agencée à une position différente de la deuxième surface de chemin de roulement dans une direction axiale et formé d'un seul tenant avec ou séparément du deuxième élément de chemin de roulement (11) ;
une pluralité d'éléments de roulement (13) agencés entre la première surface de chemin de roulement et la deuxième surface de chemin de roulement de manière à rouler ; et
une cage annulaire (14) qui maintient la pluralité d'éléments de roulement (13) à des intervalles donnés dans la direction circonférentielle et a une surface guidée (22) opposée à la surface de guidage (21) de sorte que la surface guidée puisse entrer en contact coulissant avec la surface de guidage,
dans lequel un trajet d'écoulement (17) de l'air comprimé pour la fourniture d'une huile de lubrification est prévu dans l'élément de guidage (15),
dans lequel le trajet d'écoulement (17) a une ouverture d'évacuation (17c') dans la surface de guidage,
dans lequel la surface guidée a deux surfaces pulvérisées annulaires (23, 23a, 24a1, 24a2, 24b, 25a1, 25a2) auxquelles l'air comprimé évacué de l'ouverture d'évacuation (17c') est pulvérisé, et
dans lequel les surfaces pulvérisées (23, 23a, 24a1, 24a2, 24b, 25a1, 25a2) sont définies en tant que surfaces inclinées, qui sont inclinées dans des directions opposées les unes aux autres par rapport à la direction axiale,
dans lequel la cage (14) est supportée par rapport à la direction axiale par une force agissant sur la cage (14) dans la direction axiale obtenue en pulvérisant l'air comprimé sur chacune des surfaces pulvérisées (23, 23a, 24a1, 24a2, 24b, 25a1, 25a2).

2. Palier à roulement selon la revendication 1,
dans lequel la surface guidée a une rainure annulaire (23, 25) formée le long de la direction circonférentielle,
dans lequel le trajet d'écoulement a l'ouverture d'évacuation (17c') ouverte dans la surface de guidage et configurée pour évacuer l'air comprimé dans la direction radiale,
dans lequel l'ouverture d'évacuation (17c') est agencée de manière à être opposée à la rainure annulaire (23, 25) dans la direction radiale dans une largeur d'ouverture de la rainure annulaire (23, 25),
dans lequel la rainure annulaire (23, 25) a une paire de surfaces de parois latérales comme étant les surfaces pulvérisées qui sont inclinées dans les directions opposées les unes aux autres par rapport à la direction axiale de sorte qu'une distance entre la paire de surfaces de parois latérales diminue progressivement d'un côté d'ouverture de la rainure (23, 25) à un côté de fond de rainure, et
dans lequel la distance entre la paire de surfaces de parois latérales opposées est réglée supérieure à un diamètre de l'ouverture d'évacuation (17c') dans un bord d'ouverture de la rainure (23, 25) et inférieure au diamètre de l'ouverture d'évacuation (17c') au fond de la rainure.

3. Palier à roulement selon la revendication 2,
dans lequel la cage (14) est mobile dans une plage donnée dans la direction axiale, et dans lequel les dimensions d'un diamètre de l'ouverture d'évacuation (17c') et d'une largeur d'ouverture de la rainure annulaire (23, 25) sont réglées de sorte que l'ouverture d'évacuation (17c') soit opposée à la rainure annulaire (23, 25) dans la largeur d'ouverture de la rainure annulaire (23, 25) même lorsque la cage (14) est déplacée dans la direction axiale.

4. Palier à roulement selon la revendication 1 ou 2,
dans lequel le trajet d'écoulement a au moins deux ouvertures d'évacuation (17c') séparées l'une de l'autre dans la direction axiale dans la surface de guidage, et
dans lequel la surface guidée a deux surfaces annulaires pulvérisées auxquelles l'air comprimé évacué des deux ouvertures d'évacuation est pulvérisé respectivement.

5. Palier à roulement selon la revendication 4,
dans lequel les deux ouvertures d'évacuation (17c') sont agencées en parallèle dans la direction axiale, et
dans lequel le trajet d'écoulement a une autre ouverture d'évacuation entre les deux ouvertures d'évacuation.

6. Palier à roulement selon la revendication 4 ou 5,
dans lequel l'une des deux ouvertures d'évacuation (17c') est agencée sur un côté de l'élément de roulement (13) dans la direction axiale, et
dans lequel l'autre des deux ouvertures d'évacuation (17c') peut être agencée sur l'autre côté de l'élément de roulement (13) dans la direction axiale.

7. Palier à roulement selon l'une quelconque des revendications 1 à 6,
dans lequel l'élément de guidage (15) comprend une entretoise (15) agencée adjacente au deuxième élément de chemin de roulement (11).

8. Palier à roulement selon l'une quelconque des revendications 1 à 7,
dans lequel la surface de guidage est agencée du côté de la première surface de chemin de roulement que dans la deuxième surface de chemin de roulement par rapport à la direction radiale.
